# EUROPEAN PATENT APPLICATION

(11) **EP 0 742 663 A2**
(43) Date of publication of application: **13.11.1996**
(21) Application number: 96303330.3
(22) Date of filing: 13.05.1996
(51) Int. Cl.: H04M 3/50

(54) **Messaging systems**

(30) Priority: 12.05.1995 GB 9509623
(71) Applicant: INTELLPROP LIMITED, Guernsey, Channel Islands (GB)
(72) Inventor: Wilson, Jeffrey, Fareham, Hampshire PO16 7OH (GB)
(74) Representative: Pilch, Adam John Michael

(57) **Abstract**

In a messaging system such as a voice message system, message retrieval is restricted to authorised users by the need to dial a PIN following the telephone number for access to the system.

For environments in which no post dial signalling is available, such as when pulse dialling is used, the system recognises a specific prefix to the number being dialled, and allows reception of additional dialled digits, which constitute the PIN, before generation of a "dialled digits complete" signal. The received PIN associated with the user's number is then compared with data held in a store (20), and message retrieval is enabled only if the comparison is positive.

A facility may be provided for users to change their PINs.

The additional digits may instead be used for transmission to called parties, the digits signifying corresponding standard phrases.

## Description

This invention relates to messaging systems in which certain functions may be controlled by the telephone dialling of digits, such as additional digits following a telephone number. Such functions may include message delivery and/or retrieval by means of telephone communication.

If an individual is aware of a general or specific telephone number which can be used to access equipment such as a telephony server or to retrieve messages from a telephony server, it is at present possible to use a telephone to dial the appropriate number. If further input of a PIN is required, and the telephone has tone (MF) signalling, then, of course, the additional information can be input by dialling further numbers.

If the telephone has no tone signalling, then pulse dial detection means may be used in some conditions; however, these will not work in all environments. This will also be the case when it is desired to input further digits for other purposes. In typical systems, a "dialled digits complete" signal will be sent to the signalling interface, whereupon further pulse dial detection will not take place. Input of further numbers will not then be detected.

Therefore, in the current state of the art, there is a problem when a PIN (or other code) input is required to provide secure access to information and/or messages and to prevent third party access if the telephone handset used does not have MF signalling.

Although many countries have fixed numbering schemes, in some situations it is the telephony server that tells the network when enough digits have been received to create a complete telephone number input.

Thus, for example, when calling the switchboard of a company one may input 06151 860 but if one were calling an individual at that company one might dial 06151 862137, if the individual's extension number is 2137. In other words, the length of the number to be dialled depends on the number itself, and generally PABXs in such environments have simple rules to allow access on a short code to the switchboard or a longer code to reach a direct extension.

According to one aspect of the invention there is provided a messaging system comprising:
means for receiving dialling signals entered by the use of telephone dialling means;
means for responding to a specific dialled prefix received by the receiving means to allow a predetermined number of additional digits to be received before generation of a "dialled digits complete" signal to inhibit reception of further digits;
means for storing PINs associated with respective characteristic numbers;
means for comparing a received characteristic number and the PIN formed by the additional digits with the stored characteristic numbers and associated PINs; and
means for retrieving a stored message associated with the received characteristic number, if the received characteristic number and PIN match those associated in the storage means.

According to another aspect of the invention there is provided a messaging system comprising:
means for receiving dialling signals entered by the use of telephone dialling means;
means for responding to a specific dialled prefix received by the receiving means to allow a predetermined number of additional digits to be received before generation of a "dialled digits complete" signal to inhibit reception of further digits; and
means for onward transmission of a message associated with the received additional digits.

The present invention also provides a programmed data store and programming means to the signalling interface of a telephony server such that, when additional digits are required for PIN number entry or other purposes, the telephony server will only signal "dialled digits complete" when all relevant basic number and additional number input is complete.

For example, a pager user may have a pager number 123456 with a voice message facility so that third parties can leave voice messages for the user by dialling 06161 123456. A system embodying the invention may allow the message to be retrieved by dialling a different prefix followed by the same number, e.g. 06162 123456. However, any other party aware of this scheme could ring in to hear what messages had been left for the pager user.

One possible solution would be to associate a different number with the 06162 prefix which was randomly generated by the telephony server and which it would cross link so that having sent this new number to the pager, the user could access a message using this new number.

This has a number of disadvantages in that the user cannot easily check for messages, perhaps in the circumstance where the pager has been left at home and the user would want to ring in every few hours to check for an anticipated message.

However, in a system embodying this invention, the pager user is told that the access code for message retrieval is, for example, 06162 123456 nnnnn, where nnnnn is a predefined number, which normally one would anticipate the user or the system manager could change, of a length such that reasonable security is provided given the constraints of the telephone company's numbering plan, which normally specifies the maximum length of a telephone number.

In this case, then, the complete 16 digits dialled are treated as the telephone number by the network and system. The telephony server, having detected that this is a PIN number access from the prefix 06162, will anticipate additional digits and instruct the signalling interface not to give the end of dialled digits signal until the PIN is received. It will then use its internal or external database to check that the PIN is correct for the input pager number.

This use of variable dynamic length numbering with a telephony server therefore allows secure message retrieval in environments in which no post dial signalling is available.

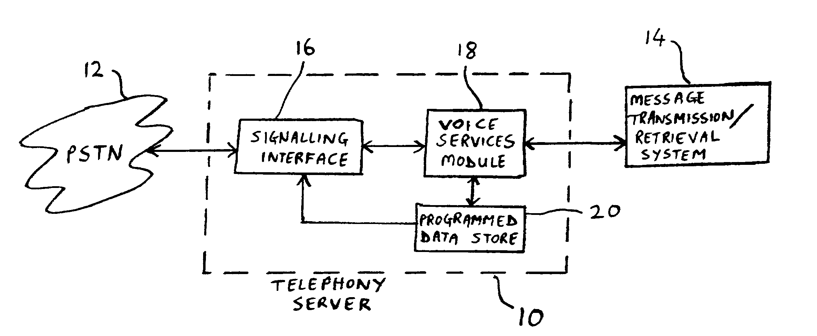

The invention will now be described by way of example with reference to the accompanying single figure drawing which shows a telephony server system according to an embodiment of the invention.

Referring to the drawing, there is shown a telephony server 10 connected to the public switched telephone network (PSTN) 12 and to a message transmission/retrieval system 14. Although the message transmission/retrieval system 14 is shown as being external to the telephony server 10, the system 14 could instead form part of the telephony server 10.

The telephony server 10 may, for example, be a Telsis Hi-Call, particular features of which are described in International Patent Application Publication No. WO 92/22165. In that publication, the telephony server is referred to as a voice services equipment (VSE). Other terms which can be used include voice response system (VRS) or interactive voice response (IVR) equipment.

The telephony server 10 includes a signalling interface 16, a voice services module 18 and a programmed data store 20, connected as shown. If the capacity of a single telephony server is insufficient, a number of telephony servers could be connected together and programmed to act as a single system.

In a system used for message retrieval, operation is as follows. Third parties may leave voice messages for a system user by dialling, for example, 06161 123456. When the system recognises the prefix 06161, it is set into a message storage mode whereby the voice message left by the third party is stored in the message retrieval system 14 and is associated with the user's characteristic number, namely 123456. Conventionally, this could then be retrieved by the user dialling, for example 06162 123456. The prefix 06162 sets the system into a message retrieval mode whereby a search is conducted for any message stored in the message retrieval system 14 associated with the user's characteristic number, namely 123456. The disadvantage of this basic system is that any other party may likewise dial in 06162 123456 and retrieve the user's messages without authorisation.

In the system embodying the invention, however, the system user is informed that the access code for message retrieval is, for example, 06162 123456 24680, 24680 being a predetermined number acting as a PIN (personal identification number). In any particular system, the length of the PIN would be set such that reasonable security is provided within the constraints of the system's numbering plan. In the system as described, the complete 16 digits which have been dialled are treated as the telephone number by the network and system. The telephony server 10 includes details of all users' PINs in the data store 20. When a prefix 06162 is recognised by the telephony server 10, the system is set to receive additional digits (namely those representing the PIN) such that a "dialled digits complete" signal is not sent to the signalling interface 16 (and, where appropriate, further back to exchange equipment via the PSTN 12) until all 16 digits have been received. This is in contrast to the situation in which the system receives different prefixes, such as 06161 for message deposit, whereupon the signalling interface 16 receives a "dialled digits complete" signal after receipt of 11 digits.

Once the 16 digits have been received, the telephone server 10 compares the characteristic number (e.g. 123456) with the PIN (e.g. 24680) and if the numbers match according to the stored information in the data store 20, then any corresponding voice messages are retrieved from the message retrieval system 14 and sent via the telephony server 10 to the user.

A refinement of the system allows the user to change his PIN if desired. The system can be set into a mode for PIN change, for example, by the user calling a different prefix followed by the characteristic number and existing PIN, such as 06163 123456 24680. In response to a voice request from the voice services module 18, the user may then enter the desired new PIN, possibly twice to act as confirmation of correct entry. Alternatively this could be done without voice interaction, for example by dialling 06163 123456 24680 13579 13579, 24860 being the existing PIN and 13579 being the desired new PIN. In this case, the signalling interface 16 must be set (in response to the prefix 06163) to expect 26 digits.

It will be apparent from the above description of the preferred system that the use of variable dynamic length numbering with the telephony server 10 allows secure message retrieval in environments (such as pulse dial systems) in which no post dial signalling is available.

The system embodying the invention can also be used in other circumstances where further code input (following a basic telephone number) is desired. For example, in a previously proposed message transmission system, a code such as a three-digit code can be added to signify a corresponding standard phrase to the message recipient. A caller dials the number associated with a message receiving means (such as a pager) to be reached, e.g. 06161 123456 as above. Once the connection is made, the caller inputs a further three digits, either by tone signalling or by system speech recognition of those digits. The system then transmits the message to the desired pager so that the three-digit code is displayed on the pager. For example, the number 305 may signify "Thank you for yesterday". One problem with this arrangement is that, as described above, the system may be difficult to implement with pulse dial detection due to the lack of post dial signalling ability, such that speech recognition would need to be used, which can be cumbersome. Another problem is that both the caller and the pager user must have access to a code book or the like, for effective message transmission.

In a system embodying the invention, the telephony server 10 receives instructions from the programmed data store 20 to the effect that further digits, in this case the standard phrase message code, are to be expected whereby the "dialled digits complete" signal is sent to the signalling interface 16 only after the code has been received.

A number of enhancements are possible with such a system. For example, the paging control system/transmitter and/or the paging receiver can include a look-up table for translating the three-digit code back into the alpha message. This overcomes the need for the pager user to carry a code book. Furthermore, the telephony server 10 may have a facility whereby if the caller adds a characteristic code such as "000" to the end of the number instead of a standard phrase message code, the telephony server 10 may read back phrases, possibly starting with an index, the caller interacting by means of voice response until the required phrase is identified and confirmed by the caller. This avoids the caller having to carry a code book.

## Claims

1. A messaging system comprising:
means (16) for receiving dialling signals entered by the use of telephone dialling means;
means (10) for responding to a specific dialled prefix received by the receiving means (16) to allow a predetermined number of additional digits to be received before generation of a "dialled digits complete" signal to inhibit reception of further digits;
means (20) for storing PINs associated with respective characteristic numbers;
means (18,20) for comparing a received characteristic number and the PIN formed by the additional digits with the stored characteristic numbers and associated PINs; and
means (14) for retrieving a stored message associated with the received characteristic number, if the received characteristic number and PIN match those associated in the storage means (20).

2. A messaging system according to claim 1, wherein the stored message is a voice message.

3. A messaging system according to claim 1 or claim 2, wherein at least the receiving means (16), the responding means (10), the storage means (20) and the comparing means (18,20) are constituted by at least one telephony server (10).

4. A messaging system according to claim 1, claim 2 or claim 3, including means (10) for enabling a user to change the user's PIN.

5. A messaging system according to claim 4, wherein the PIN changing means (10) is responsive to dialled entry of a desired new PIN after dialled entry of the existing PIN to replace the existing PIN by the new PIN in the storage means (20).

6. A messaging system according to claim 5, wherein the PIN changing means (10) is responsive to the PIN being entered twice as confirmation of correct entry.

7. A messaging system comprising:
means (16) for receiving dialling signals entered by the use of telephone dialling means;
means (10) for responding to a specific dialled prefix received by the receiving means (16) to allow a predetermined number of additional digits to be received before generation of a "dialled digits complete" signal to inhibit reception of further digits; and
means (14) for onward transmission of a message associated with the received additional digits.

8. A messaging system according to claim 7, wherein the transmitted message comprises the received additional digits.

9. A messaging system according to claim 7 or claim 8, wherein, upon receipt of a predetermined sequence of additional digits, a telephony server (10) provides voice interactive functions to the caller.
